# EUROPEAN PATENT APPLICATION

(11) **EP 4 792 978 A1**
(43) Date of publication of application: **19.08.2026**
(21) Application number: 26155837.3
(22) Date of filing: 02.02.2026
(51) Int. Cl.: B24B 9/14, B28D 1/14, G02C 1/00

(54) **METHOD FOR PROCESSING LENS FOR LENS-OVER-FRAME GLASSES**

(30) Priority: 14.02.2025 KR 20250019194
(71) Applicant: Huvitz Co., Ltd., Anyang-si, Gyeonggi-do 14055 (KR)
(72) Inventor: LEE, Hyun Chul, 14055 Anyang-si (KR); JEONG, Chan Kyo, 14055 Anyang-Si (KR); OH, Dong Kun, 14055 Anyang-si (KR)
(74) Representative: Henkel & Partner mbB

(57) **Abstract**

A method for processing a lens for lens-over-frame glasses is disclosed. The method includes providing a lens-over-frame having a lens mounting hole formed in a center thereof, a lens mounting groove formed at a front edge thereof, and a lens catch in the form of a protrusion formed in front of the lens mounting groove; and forming a rim groove on a rear edge of a lens, which has been processed to correspond to a peripheral shape of the lens-over-frame, by using a grinding wheel, thereby forming a central protrusion corresponding to the lens mounting hole of the lens-over-frame, wherein, by forming the rim groove, the edge portion of the lens has a shape protruding outward so as to be inserted into the lens mounting groove of the lens-over-frame.

## Description

### CROSS-REFERENCE TO RELATED APPLICATION

This application claims benefit of priority to Korean Patent Application No. 10-2025-0019194 filed on February 14, 2025, the entire contents of which are incorporated herein by reference.

### FIELD OF THE DISCLOSURE

The present invention relates to a method for processing a lens for lens-over-frame glasses, and more particularly, to a method for processing a lens capable of being mounted on a lens-over-frame.

### BACKGROUND

Generally, to manufacture eyeglass lenses, a commercially available circular lens (commonly referred to as a "blank lens") must be processed into the shape of a desired eyeglass lens, for example, the shape of an eyeglass frame.

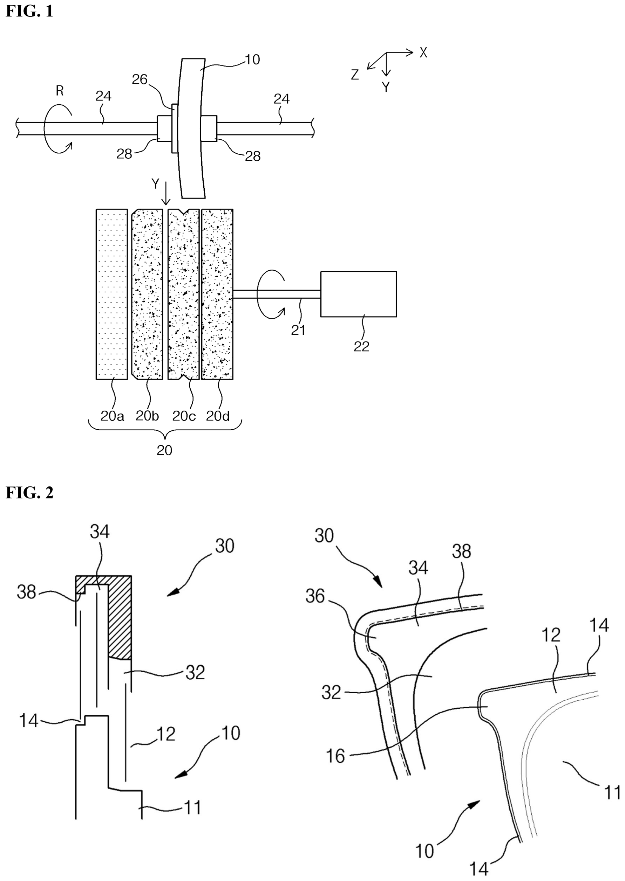

FIG. 1 is a view showing a conventional lens processing apparatus. As shown in FIG. 1, a conventional lens processing apparatus (lens edger) includes a grinder 20 rotated by a motor 22, and a circular lens 10 fixed by a pair of clamps 24 is positioned to face the grinder 20. The grinder 20 is mounted on a wheel shaft 21 rotated by the motor 22 and may include a roughing grinder 20a, a beveling grinder 20b, a V-groove grinder 20c, and a finishing grinder 20d to process the lens 10 into a desired shape.

The clamps 24 serve as rotation and movement axes for rotating (in the R direction) or moving (in the Y direction) the lens 10. The lens processing apparatus moves the clamps 24 toward the roughing grinder 20a (the Y direction in FIG. 1) so that the edge of the lens 10 contacts the rotating roughing grinder 20a, thereby grinding the edge of the lens 10. When this grinding process is performed over the entire circumference of the lens 10 while rotating the lens 10 (in the R direction) (i.e., 3-axis movement of the lens 10), the lens 10 can be roughly processed into a desired shape. In FIG. 1, reference numeral 26 denotes a lens fixing tape, and reference numeral 28 denotes a lens fixing block, which are used to firmly couple the lens 10 to the clamps 24. Meanwhile, an eyeglass lens edge processing apparatus is disclosed in Korean Patent Publication No. 10-2018-0072039.

A "lens-over-frame" is a type of eyeglass frame in which the edges of the lens cover the front portion of the frame; that is, the lens is positioned over the frame structure when seen from the front. Glasses using such a lens-over-frame are commonly referred to as lens-over-frame glasses or lens-over-frame style glasses. To mount a lens on such a lens-over-frame, the lens must be processed to fit the specific geometry of the lens-over-frame. However, processing a lens to fit the shape of a lens-over-frame conventionally requires using an expensive milling machine to perform complex machining processes, or requires an optician to manually process the lens, which is problematic as it is time-consuming and labor-intensive.

### [Prior Art Document]

(Patent Document 1) Korean Patent Publication No. 10-2018-0072039 A (2018.06.29)

### SUMMARY OF THE DISCLOSURE

### TECHNICAL OBJECTS

It is an object of the present invention to provide a method for processing a lens that can be mounted on a lens-over-frame using a conventional lens processing apparatus (lens edger) without requiring an expensive milling machine.

### TECHNICAL SOLUTION

To achieve the above object, the present invention provides a method for processing a lens for lens-over-frame glasses, comprising: providing a lens-over-frame having a lens mounting hole formed in a center thereof, a lens mounting groove formed at a front edge thereof, and a lens catch in the form of a protrusion formed in front of the lens mounting groove; and forming a rim groove on a rear edge of a lens, which has been processed to correspond to a peripheral shape of the lens-over-frame, by using a grinding wheel, thereby forming a central protrusion corresponding to the lens mounting hole of the lens-over-frame, wherein, by forming the rim groove, the edge portion of the lens has a shape protruding outward so as to be inserted into the lens mounting groove of the lens-over-frame.

Preferably, the grinding wheel may include a wheel body configured to be mounted on a wheel shaft of a lens edger; a wheel abrasive portion formed at a front edge of the wheel body; and a discharge space formed inside the wheel abrasive portion to discharge grinding residues of the lens and prevent overheating caused by friction.

Preferably, an outer surface of the wheel abrasive portion is gradually inclined toward a center as it extends forward to process a lower surface of the rim groove of the lens at an angle.

The present invention also provides a method for processing a lens for lens-over-frame glasses, comprising: providing a lens-over-frame having a lens mounting hole formed in a center thereof, a lens mounting groove formed at a front edge thereof, and a lens catch in the form of a protrusion formed in front of the lens mounting groove; and forming a catch groove, supported by the lens catch of the lens-over-frame, at a front edge of the lens, which has been processed to correspond to a peripheral shape of the lens-over-frame, using a drilling device.

Preferably, the drilling device may include a drill drive unit for rotating a drill; a head unit to which the drill drive unit is rotatably mounted; a drill frame to which the head unit is movably mounted in a forward and backward direction; and a head drive unit for moving the head unit in the forward and backward direction.

### EFFECTS OF THE DISCLOSURE

According to the method for processing a lens for lens-over-frame glasses of the present invention, a lens can be more stably mounted onto a lens-over-frame. Furthermore, the lens capable of being mounted on the lens-over-frame can be processed using a conventional lens processing apparatus without the need for an expensive milling machine.

### BRIEF DESCRIPTION OF THE DRAWINGS

The above and other objects, features, and other advantages of the present invention will be more clearly understood from the following detailed description taken in conjunction with the accompanying drawings, in which:
FIG. 1 is a view showing a conventional lens processing apparatus;
FIG. 2 is a partial cross-sectional view and front view showing the edge of a lens processed by a method for processing a lens for lens-over-frame glasses according to the present invention;
FIG. 3 is a view showing a grinding wheel used in the lens processing method according to the present invention;
FIG. 4 is a flowchart and schematic view for explaining a lens processing method for lens-over-frame glasses according to one embodiment of the present invention;
FIG. 5 is a flowchart and schematic view for explaining a lens processing method for lens-over-frame glasses according to another embodiment of the present invention;
FIG. 6 is a perspective view showing the structure of a drilling device that can be used in the present invention; and
FIG. 7 is a flowchart and schematic view for explaining a lens processing method for lens-over-frame glasses according to yet another embodiment of the present invention.

### DETAILED DESCRIPTION OF THE PREFERRED EMBODIMENTS

Hereinafter, the present invention will be described in detail with reference to the accompanying drawings. In the drawings, features performing the same or similar functions as those in the prior art are denoted by the same reference numerals.

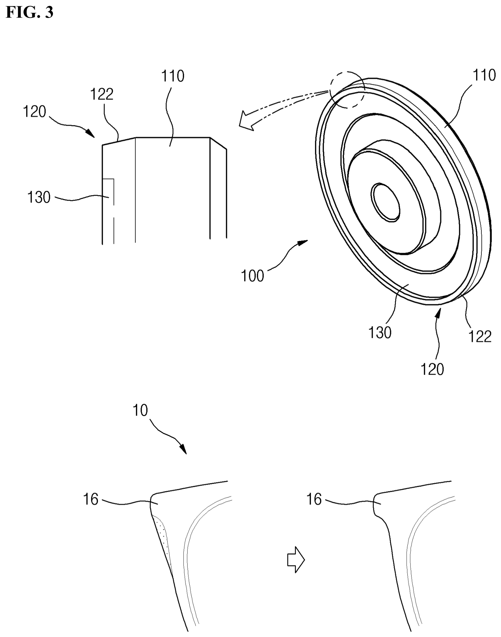

FIG. 2 is a partial cross-sectional view and front view showing the edge of a lens processed by the method for processing a lens for lens-over-frame glasses according to the present invention, and FIG. 3 is a view showing a grinding wheel that may be used in the method according to the present invention.

As shown in FIGS. 2 and 3, the lens processing method according to the present invention is a method for processing a lens 10 so that it can be mounted on a lens-over-frame 30. The lens 10 may be a prescription lens having a predetermined refractive power. The lens-over-frame 30 includes a lens mounting hole 32 formed at a central portion thereof where the lens 10 is mounted, and a lens mounting groove 34 formed at a front edge of the lens-over-frame 30.

A grinding wheel 100, as shown in FIG. 3, is mounted on the lens processing apparatus (lens edger), for example, shown in FIG. 1. Using the grinding wheel 100, the rear edge of the lens 10 clamped in the lens processing apparatus is processed - specifically, ground - to form a rim groove 12 having a shape corresponding to the lens mounting groove 34 of the lens-over-frame 30 on the rear edge of the lens 10. In particular, when the lens 10 is a prescription lens having a predetermined refractive power and is thus thicker than a standard plano lens, the rim groove 12 must be formed to mount the lens 10 onto the lens-over-frame 30.

As best shown in FIG. 2, since the rim groove 12 is formed along the rear edge, the edge portion of the lens 10 becomes thinner than the central portion and has a shape protruding outward (i.e., radially). This radially protruding portion is inserted into the lens mounting groove 34 of the lens-over-frame 30, preventing the lens 10 from being dislodged backward through the lens mounting hole 32. Particularly, in order to mount the lens 10 on the lens-over-frame 30 more stably and to enhance the aesthetic appearance, it is preferable to increase the depth of the lens mounting groove 34 and the corresponding length (depth) of the rim groove 12. In this case, the edge of the lens 10 can be seated more stably in the lens mounting groove 34 of the lens-over-frame 30. When the lens 10 processed according to the present invention is mounted on the lens-over-frame 30, the lens 10 covers the entire front of the lens-over-frame 30 when viewed from the front, thereby creating a sleek appearance that can satisfy consumer needs.

The grinding wheel 100 is a deep-step grinding wheel designed to machine the rim groove 12 with a large step on the rear edge of the lens 10. As shown in FIG. 3, the grinding wheel 100 includes a wheel body 110, a wheel abrasive portion 120, and a discharge space 130. The wheel body 110 is mounted on the wheel shaft 21 of the lens processing apparatus (See FIG. 1). The wheel abrasive portion 120 is formed at the front edge of the wheel body 110. The discharge space 130 is formed inside the wheel abrasive portion 120 (i.e., recessed from the abrasive surface) to discharge grinding residues of the lens 10 and to prevent overheating that may occur due to friction.

The wheel abrasive portion 120 is formed to protrude along the front edge of the wheel body 110 to machine the rim groove 12 on the rear edge of the lens 10. Through the discharge space 130, residues generated during the processing of the lens 10 are smoothly discharged, allowing compressed air or cutting fluid sprayed onto the lens 10 to flow smoothly.

The outer surface 122 of the wheel abrasive portion 120 is formed to be gradually inclined toward the center as it extends forward (in the direction away from the wheel body), thereby machining the lower surface of the rim groove 12 of the lens 10 at an angle (see FIG. 2). Accordingly, after machining the rim groove 12, the grinding wheel 100 can be easily separated from the rim groove 12. The lens mounting groove 34 is formed in the lens-over-frame 30 in a shape corresponding to the inner surface of the rim groove 12, so that the lens 10 is stably mounted in the lens mounting groove 34. Therefore, the lens 10 is prevented from dislodging rearward through the lens mounting hole 32.

The inclination of the outer surface 122 of the wheel abrasive portion 120 is formed at an angle of 10° to 14°, for example, 12°, relative to the outer circumferential surface of the wheel body 110. The depth of the rim groove 12 processed by the grinding wheel 100 is 10 mm to 30 mm, for example, 20 mm, from the edge toward the center of the lens 10.

Also, as shown in FIG. 2, an indented (concave) lens mounting groove 36 may be formed at a corner adjacent to a position where an eyeglass temple is mounted among the lens-over-frame 30. In this case, a convex mounting portion 16 is formed on the lens 10 to correspond to the concave lens mounting groove 36. As shown in the lower drawing of FIG. 3, the upper part of the convex mounting portion 16 having a protruding shape is formed by extending the upper end of the lens 10, and the lower part of the convex mounting portion 16 is formed by machining the shape of a groove using a drill or the like after side processing of the lens 10.

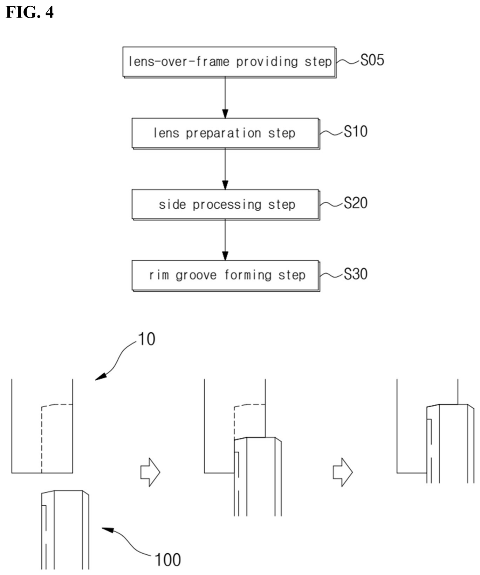

FIG. 4 is a view for explaining a lens processing method for lens-over-frame glasses according to one embodiment of the present invention. As shown in FIG. 4, the method for processing a lens according to the present invention includes a lens-over-frame providing step (S05) and a rim groove forming step (S30), and may further include a lens preparation step (S10) and a side processing step (S20).

The lens-over-frame providing step (S05) is a step of providing a lens-over-frame 30 in which a lens mounting hole 32 for mounting the lens 10 is formed in the center, a lens mounting groove 34 is formed at the front edge, and a lens catch 38 in the form of a protrusion is formed in front of the lens mounting groove 34.

The lens preparation step (S10) is a step of preparing or manufacturing a blank lens 10 having a predetermined refractive power as needed. The side processing step (S20) is a step of processing the edge of the lens 10 to correspond to the peripheral shape of the lens-over-frame 30.

The rim groove forming step (S30) is a step of forming a rim groove 12 on the rear edge of the lens 10, the edge of which has been processed to correspond to the peripheral shape of the lens-over-frame 30, by using the grinding wheel 100. By forming the rim groove 12, the edge portion of the lens 10 has a shape protruding outward so as to be inserted into the lens mounting groove 34 of the lens-over-frame 30. The rim groove 12 also forms a central protrusion 11 corresponding to the lens mounting hole 32 of the lens-over-frame 30.

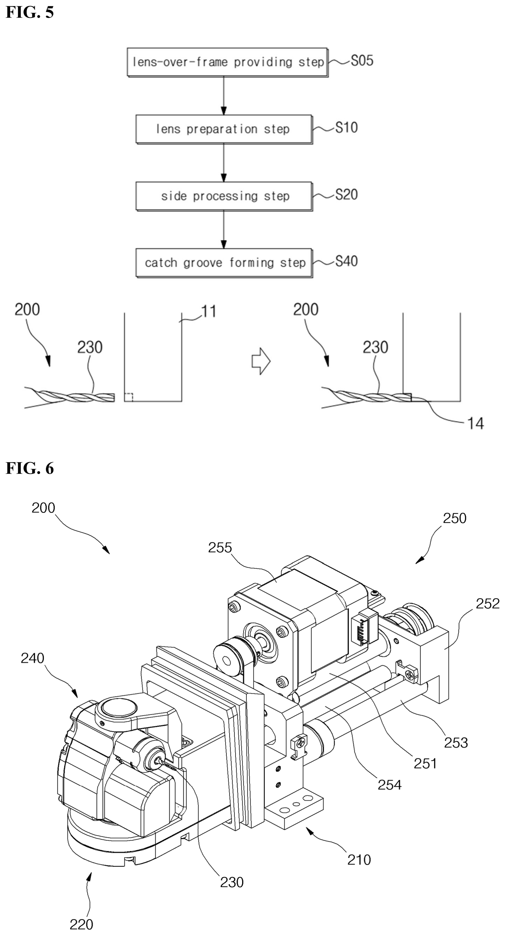

FIG. 5 is a view for explaining a lens processing method for lens-over-frame glasses according to another embodiment of the present invention. As shown in FIG. 5, the lens processing method according to another embodiment of the present invention includes a lens-over-frame providing step (S05) and a catch groove forming step (S40), and may further include a lens preparation step (S10) and a side processing step (S20).

The lens preparation step (S10) and the side processing step (S20) are as described above. The lens-over-frame providing step (S05) is a step of providing a lens-over-frame 30 having the lens mounting hole 32, the lens mounting groove 34, and the lens catch 38 as described above.

The catch groove forming step (S40) is a step of forming a catch groove 14, which is supported by the lens catch 38 of the lens-over-frame 30, at the front edge of the lens 10 using a drilling device 200, after the edge of the lens 10 has been processed to correspond to the peripheral shape of the lens-over-frame 30.

Here, as shown in FIG. 2, the lens mounting groove 34 is formed around the circumference of the lens-over-frame 30, and the lens catch 38 having a protruding shape is formed in front of the lens mounting groove 34. The edge of the lens 10 formed with the catch groove 14 is inserted into the lens mounting groove 34 of the lens-over-frame 30, and the lens catch 38 is fitted into the catch groove 14 of the lens 10, whereby the lens 10 is fixedly coupled to the lens-over-frame 30.

FIG. 6 is a view showing the structure of a drilling device 200 that can be used in the present invention. As shown in FIG. 6, the drilling device 200 includes a drill drive unit 240, a head unit 220, a drill frame 210, and a head drive unit 250.

The drill drive unit 240 is a device for rotating a drill 230 and may be a drill drive motor. The drill 230 and the drill drive unit 240 are mounted on the head unit 220, and the head unit 220 is mounted on one end of the drill frame 210. The drill drive unit 240 is rotatably mounted on the head unit 220, and the head unit 220 is mounted on the drill frame 210 so as to be movable in the forward and backward directions. Accordingly, the position of the drill 230 can be moved by the head unit 220.

The head drive unit 250 moves the head unit 220 in the forward and backward directions. The head drive unit 250 includes a drive screw 251, a drive block 252, a sliding shaft 253, a guide shaft 254, and a head drive motor 255. The drive screw 251 has threads formed on its outer circumferential surface, and its front end is rotatably mounted to the drill frame 210. The drive block 252 is located at the rear of the drill frame 210 and is screw-coupled to the drive screw 251 and is prevented from being rotated, so that when the drive screw 251 rotates, the drive block 252 moves forward or backward.

The sliding shaft 253 is mounted through the drill frame 210, with one end coupled to the head unit 220 and the other end coupled to the drive block 252. When the drive block 252 moves forward or backward, the sliding shaft 253 coupled to the drive block 252 slides through the drill frame 210, and the head unit 220 coupled to one end of the sliding shaft 253 also moves forward or backward. That is, the drive block 252, the sliding shaft 253, and the head unit 220 move together. The guide shaft 254 guides the head unit 220 to prevent it from tilting during movement and is used as necessary. The head drive motor 255 rotates the drive screw 251 to move the drive block 252 and the head unit 220 forwardly or backwardly.

As shown in FIG. 5, the catch groove 14 is formed in the lens 10 by moving the rotating drill 230 along the front edge of the lens 10 using the drilling device 200. The lens catch 38 of the lens-over-frame 30 is supported in the catch groove 14 thus formed, so that the lens 10 can be stably mounted on the lens-over-frame 30.

According to the lens processing method of the present invention, by forming at least one of the rim groove 12 and the catch groove 14 on the lens 10, the lens 10 can be stably mounted on the lens-over-frame 30. Each embodiment of the lens processing method according to the present invention may be implemented separately or together.

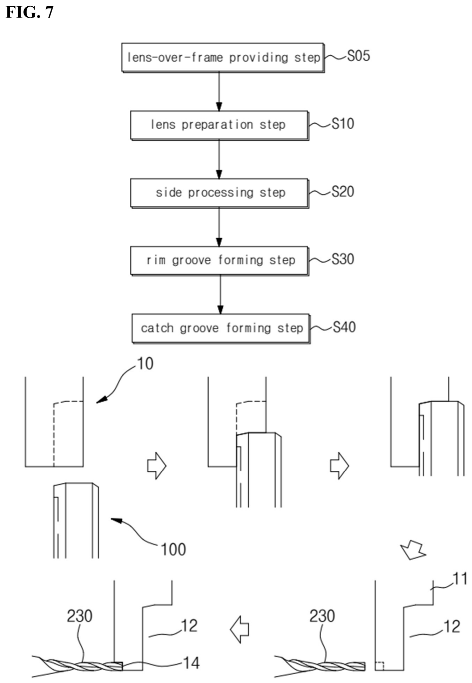

FIG. 7 is a view for explaining a lens processing method for lens-over-frame glasses according to yet another embodiment of the present invention. As shown in FIG. 7, in the lens processing method according to yet another embodiment of the present invention, both the rim groove forming step (S30) using the grinding wheel 100 described above and the catch groove forming step (S40) using the drilling device 200 described above are performed. Each of the above steps is the same as already described.

In other words, the embodiment shown in FIG. 7 includes the lens-over-frame providing step (S05), the rim groove forming step (S30), and the catch groove forming step (S40), and may further include the lens preparation step (S10) and the side processing step (S20). Here, the order of performing the rim groove forming step (S30) and the catch groove forming step (S40) may be interchanged.

Although the present invention has been described with reference to the accompanying drawings and exemplary embodiments, the present invention is not limited to the contents shown in the drawings and the above-described embodiments. Although reference numerals are indicated in the following claims to facilitate understanding, the scope of the following claims is not limited to the reference numerals and the contents shown in the drawings, but should be construed to encompass all modifications, equivalent configurations, and functions of the exemplary embodiments.

## Claims

1. A method for processing a lens for lens-over-frame glasses, the method comprising:
providing a lens-over-frame (30) having a lens mounting hole (32) formed in a center thereof, a lens mounting groove (34) formed at a front edge thereof, and a lens catch (38) in the form of a protrusion formed in front of the lens mounting groove (34); and
forming a rim groove (12) on a rear edge of a lens (10), which has been processed to correspond to a peripheral shape of the lens-over-frame (30), by using a grinding wheel (100), thereby forming a central protrusion (11) corresponding to the lens mounting hole (32) of the lens-over-frame (30),
wherein, by forming the rim groove (12), the edge portion of the lens (10) has a shape protruding outward so as to be inserted into the lens mounting groove (34) of the lens-over-frame (30).

2. The method of claim 1, wherein the grinding wheel (100) comprises:
a wheel body (110) configured to be mounted on a wheel shaft (21) of a lens processing apparatus;
a wheel abrasive portion (120) formed at a front edge of the wheel body (110); and
a discharge space (130) formed inside the wheel abrasive portion (120) and configured to discharge grinding residues of the lens (10) and prevent overheating caused by friction.

3. The method of claim 2, wherein an outer surface (122) of the wheel abrasive portion (120) is gradually inclined toward a center as the outer surface extends forward so as to process a lower surface of the rim groove (12) of the lens (10) at an angle.

4. A method for processing a lens for lens-over-frame glasses, the method comprising:
providing a lens-over-frame (30) having a lens mounting hole (32) formed in a center thereof, a lens mounting groove (34) formed at a front edge thereof, and a lens catch (38) in the form of a protrusion formed in front of the lens mounting groove (34); and
forming a catch groove (14), supported by the lens catch (38) of the lens-over-frame (30), at a front edge of the lens (10), which has been processed to correspond to a peripheral shape of the lens-over-frame (30), using a drilling device (200).

5. The method of claim 4, wherein the drilling device (200) comprises:
a drill drive unit (240) for rotating a drill (230);
a head unit (220) to which the drill drive unit (240) is rotatably mounted;
a drill frame (210) to which the head unit (220) is movably mounted in a forward and backward direction; and
a head drive unit (250) for moving the head unit (220) in the forward and backward direction.
